# EUROPÄISCHE PATENTSCHRIFT

(11) **EP 3 311 992 B1**
(45) Veröffentlichungstag und Bekanntmachung des Hinweises auf die Patenterteilung: **23.08.2023**
(21) Anmeldenummer: 17196174.1
(22) Anmeldetag: 12.10.2017
(51) Int. Cl.: B29C 70/52

(54) **VERFAHREN ZUR HERSTELLUNG EINES THERMOPLASTISCHEN STRANGPROFILS**
METHOD FOR MANUFACTURING A THERMOPLASTIC PROFILE
PROCÉDÉ DE FABRICATION D'UN PROFILÉ THERMOPLASTIQUE

(30) Priorität: 18.10.2016 DE 102016119765
(43) Veröffentlichungstag der Anmeldung: 25.04.2018
(73) Patentinhaber: REHAU Industries SE & Co. KG, 95111 Rehau (DE)
(72) Erfinder: Al-Sheyyab, Ahmad, 95111 Rehau (DE); Schmidt, Steven, 95182 Döhlau (DE); Pardos, Santiago, 95100 Selb (DE); Goldstein, Jörg, 95028 Hof (DE)

(56) Entgegenhaltungen:
- EP-A1- 0 752 306
- EP-A2- 1 842 657
- WO-A1-2006/051084
- WO-A1-2012/139582
- WO-A1-2015/168440
- DE-A1-102013 222 923
- US-A- 5 716 487
- US-A- 6 029 411
- US-A1- 2006 045 980
- US-A1- 2014 109 607

## Beschreibung

Die Erfindung betrifft ein Verfahren zur Herstellung und Nutzung eines thermoplastischen Strangprofils,
- wobei das mindestens eine Hohlkammer aufweisende Strangprofil mit Hilfe eines Strangproduktionsprozesses hergestellt wird.

Bei dem thermoplastischen Strangprofil handelt es sich erfindungsgemäß um ein in Achsrichtung bogenförmiges Schienenprofil für einen Schiebedeckel, vorzugsweise Glasschiebedeckel einer Kühltruhe, insbesondere Gefriertruhe, wie sie beispielsweise in Supermärkten anzutreffen ist. Gemäß dem Stand der Technik werden derartige Profile in der Regel mit einem Extrusionsverfahren aus einem unverstärkten Polymer hergestellt. Um jedoch bei den in diesen Anwendungsfällen großen Spannweiten der Profile eine ausreichende mechanische Festigkeit zu gewährleisten, muss in die Hohlkammer regelmäßig ein metallisches Armierungselement eingeschoben werden. Hierdurch wird zwar die mechanische Stabilität erheblich verbessert, dieser Vorteil muss jedoch wegen dem gleichzeitig als Wärmebrücke fungierenden metallischen Armierungsprofil mit deutlich schlechteren Wärmedämmeigenschaften erkauft werden. Aus der US 6 029 411 A ist eine Schwingtür für Kühlschränke in Supermärkten bekannt, deren Rahmen mittels Pultrusion aus faserverstärktem Kunststoff hergestellt ist. Die US 2014/109607 A1 offenbart ein Verfahren zur Herstellung und Nutzung eines Strangprofils mit einer Bogenform für einen Schiebedeckel einer Kühltruhe.

Die EP 0 752 306 A1 beschreibt die Herstellung von faserverstärkten Polymerprofilen mittels reaktiver Pultrusion.

Die DE 10 2013 2222923 A1 offenbart ein faserverstärktes polymeres Strukturbauteil für Kraftfahrzeuge.

Der Erfindung liegt die Aufgabe zugrunde, ein Verfahren anzugeben, mit dem die Herstellung eines thermoplastischen Strangprofils mit hoher mechanischer Stabilität und gleichzeitig guten Wärmedämmeigenschaften möglich ist.

Diese Aufgabe wird durch die Merkmalskombination des Anspruchs 1 gelöst. Erfindungsgemäß wird also zur Herstellung des thermoplastischen Strangprofils ein Pultrusionsverfahren eingesetzt, bei dem endlose Faserstränge, welche während der Verfahrens in eine Polymermatrix eingebettet werden, aus dem Werkzeug herausgezogen werden. Derartige Pultrusionsverfahren sind im Stand der Technik bei der Herstellung von Duroplast-Profilen bekannt. Die Einsatzstoffe zur Herstellung von Duroplasten sind dünnflüssig und können daher im Wege eines Pultrusionsverfahrens gut verarbeitet werden. Aufgrund ihrer hohen Zähigkeit sind hingegen thermoplastische Materialien, welche aufgrund ihrer nachträglichen Bearbeitungsmöglichkeiten (schweißbar, plastisch verformbar etc.) und ihrer Eigenschaften (Zähigkeit, Recyclingfähigkeit etc.) wesentliche Vorteile gegenüber Duroplasten bieten, für eine Pultrusion grundsätzlich nicht geeignet. Im Rahmen der Erfindung wird nun jedoch die chemische Herstellung des Thermoplasten erst im eigentlichen Pultrusionsprozess durch die Zufuhr entsprechender Monomere durchgeführt, also in Form einer reaktiven Pultrusion. Zweckmäßigerweise wird die thermoplastische Matrix des Kernprofils hierbei aus dünnflüssigen, für die Verarbeitung in einer Pultrusion geeigneten Monomeren und/oder reaktiven Oligomeren hergestellt, die während der reaktiven Pultrusion zum Thermoplast polymerisiert werden. Zweckmäßigerweise sind die Oligomere jeweils aus 2 bis 100, z.B. 5 bis 50 Monomeren zusammengesetzt. Bei Bedarf können der reaktiven Pultrusion Zusatzstoffe, z.B. Initiatoren, beispielsweise in Form von Peroxiden oder anderen Radikale bildenden Verbindungen, und/oder Katalysatoren und/oder Aktivatoren, wie z.B. Stabilisatoren und/oder Schlagzäh-Modifier, zugegeben werden. Je nach herzustellendem Thermoplast sind der reaktiven Pultrusion zwei oder mehr verschiedene Monomere und/oder reaktive Oligomere zuzuführen (Bsp. Polyester). Im Rahmen der Erfindung liegt es aber auch, dass zur Polymerisation lediglich ein Monomer bzw. sich lediglich durch die Kettenlänge unterscheidende Oligomere eingesetzt werden (Bsp. PMMA). Die reaktive Pultrusion erlaubt insgesamt einen sehr hohen Faseranteil im Kernprofil, beispielsweise mehr als 60 Gew.-%, insbesondere mehr als 80 Gew.-% Faseranteil, so dass aufgrund dieses hohen Anteils an Endlosfasern eine beträchtliche Erhöhung der mechanischen Stabilität erzielt werden kann, welche beispielsweise um ein Mehrfaches höher ist als bei unverstärkten Thermoplast-Profilen. Die endlosen Verstärkungsfasern bestehen vorzugsweise aus Glas- und/oder Carbonfasern. Die äußere Beschichtung hat zweckmäßigerweise eine Schichtdicke von maximal 5 mm, z.B. maximal 2 mm, ggf. maximal 1 mm. Aufgrund der hohen mechanischen Festigkeit kann beim erfindungsgemäß hergestellten Profil vorzugsweise auf das Einschieben einer Metallarmierung in die Hohlkammer verzichtet werden, so dass das Profil bei hoher mechanischer Performance gleichzeitig exzellente Wärmedämmeigenschaften aufweist. Dies ist insbesondere beim bevorzugten Einsatz des Profils als Schienenprofil für einen Glasschiebedeckel einer Kühltruhe von Bedeutung.

Durch die Kombination des reaktiven Pultrusionsprozesses mit einer Beschichtung des damit hergestellten Kernprofils wird sichergestellt, dass die insbesondere im genannten Anwendungsfall des Schienenprofils für einen Glasschiebedeckel einer Kühltruhe, insbesondere Gefriertruhe, hohen Anforderungen an die Oberfläche (z.B. Hochglanz, geringe Verschmutzungsneigung, Haptik) trotz des hohen Faseranteils des Kernprofils erfüllt werden können. Zweckmäßigerweise ist die Beschichtung vollflächig oder aber auch lediglich bereichsweise auf die äußere Oberfläche des Kernprofils aufgetragen. Eine vollflächige Auftragung meint, dass die Beschichtung das Kernprofil lückenlos umschließt. Dies kann zweckmäßig sein, sofern die gesamte äußere Oberfläche des Kernprofils die entsprechend hohe Oberflächengüte aufweisen muss. Wenn jedoch einzelne Bereiche des Kernprofils im späteren Gebrauch (z.B. aufgrund einer gemeinsam von Beschichtung und Kernprofil gebildeten Hohlkammer) verdeckt bzw. aufgrund der Montage weiterer Bauteile nicht sichtbar oder nicht zugänglich sind, können diese Oberflächenbereiche des Kernprofils von der Beschichtung ausgespart werden. Vorzugsweise bedeckt die Beschichtung mindestens 70 %, z.B. mindestens 80 %, vorzugsweise mindestens 90 % der äußeren Oberfläche des Kernprofils.

Zweckmäßigerweise wird die thermoplastische Matrix des Kernprofils als Polyamid(PA)-Matrix oder Polyacrylat-Matrix, insbesondere PMMA-Matrix, ausgebildet. In diesem Fall werden der reaktiven Pultrusion die entsprechenden Monomere und/oder reaktiven Oligomere zur Herstellung von PA, insbesondere PA 6 oder PA 12, bzw. Polyacrylat, insbesondere PMMA zugeführt. Die Herstellung anderer Materialien während der reaktiven Pultrusion, beispielsweise von Polyester, z.B. Polyethylenterephthalat (PET), insbesondere schlagzähem Polyethylenterephthalat (PET-G), oder Polybutylenterephthalat (PBT), oder thermoplastischen Polyurethanen (TPU) wird hierdurch jedoch nicht ausgeschlossen. Die Herstellung von Bisphenol A (BPA), Polycarbonat (PC), Polyesteramiden oder Polyimiden mittels der reaktiven Pultrusion liegt hier ebenfalls im Rahmen der Erfindung.

Zweckmäßigerweise wird die Beschichtung aus einem auf dem Kernprofil haftenden Polymer hergestellt, welches vorzugsweise dem Material der thermoplastischen Matrix des Kernprofils entspricht. So wird beispielsweise bei der Ausbildung der thermoplastischen Matrix des Kernprofils als PA-Matrix zweckmäßigerweise die Beschichtung ebenfalls aus PA hergestellt oder bei einer PMMA-Matrix des Kernprofils die Beschichtung auch aus PMMA. Grundsätzlich kommen für die Beschichtung dieselben Materialien wie für die Thermoplast-Matrix des Kernprofils infrage, also neben Polyacrylat (z.B. PMMA) oder PA (z.B. PA6 oder PA12) insbesondere Polyester (z.B. PET, PET-G oder PBT), Polyurethane (z.B. TPU), BPA oder PC. Im Rahmen der Erfindung liegt es auch, dass die Beschichtung aus Polyvinylchlorid (PVC), Styrene-Acrylonitrilen (SAN), Acrylnitil-Styrol-Acrylester (ASA), Polyesteramiden oder Polyimiden hergestellt werden. Zweckmäßigerweise besteht die Beschichtung aus einem nicht faserverstärkten Material.

Im Rahmen der Erfindung liegt es insbesondere, dass die äußere Beschichtung mit dem Kernprofil coextrudiert wird. Der Begriff Coextrusion meint in diesem Zusammenhang auch den Auftrag der Beschichtung auf das frisch hergestellte Kernprofil mittels einer unmittelbar an die reaktive Pultrusion online anschließenden Extrusion, wobei in diesem Fall auch die Zwischenkühlung des Kernprofils vor dem Auftrag der Beschichtung im Rahmen der Erfindung liegt. Alternativ hierzu können bei der Coextrusion das Kernprofil und die Beschichtung in einem gemeinsamen Werkzeug hergestellt werden.

Insbesondere im Rahmen der Coextrusion ist es möglich, dass lediglich von der Beschichtung mindestens ein Funktionselement gebildet wird. Das heißt konkret, dass nur Beschichtungsmaterial für die Bildung des Funktionselementes herangezogen wird und das Kernprofil an der geometrischen Gestaltung dieses Funktionselementes nicht beteiligt ist. Im Rahmen der Erfindung liegt aber auch die partielle Bildung mindestens eines Funktionselementes lediglich durch Beschichtungsmaterial, während in diesem Fall auch das Kernprofil partiell zur geometrischen Gestaltung dieses Elementes beiträgt. So kann beispielsweise bei der Ausbildung des erfindungsgemäßen Strangprofils als Schienenprofil für einen Glasschiebedeckel einer Kühltruhe die Beschichtung bereichsweise in Form eines Auflagestegs ausgebildet sein, auf dem der Schiebedeckel aufliegt und während einer Öffnungs- bzw. Schließbewegung entlang gleitet, oder das Funktionselement kann auch als Element zur Begrenzung des vertikalen Spiels des Schiebedeckels ausgebildet sein und ist vorzugsweise an den Auflagesteg angeformt. Das Funktionselement kann auch als Aufnahmevorrichtung, z.B. Aufnahmenut, beispielsweise für ein elastomeres Dichtungselement oder für ein Rastelement zum Verrasten mit einer weiteren Komponente ausgebildet werden. Ebenso kann das Funktionselement als Rastelement zum Verrasten mit einer weiteren Komponente ausgebildet sein. Ferner kann auch die Beschichtung selbst über eine oder mehrere Hohlkammern verfügen und/oder gemeinsam mit dem Kernprofil eine oder mehrere Hohlkammern bilden. Ebenso liegt es aber auch im Rahmen der Erfindung, dass die Kontur des mindestens einen Funktionselementes, z.B. des beschriebenen Auflagesteges, von einem Querschnittsbereich des Kernprofils gebildet wird. Dieser Bereich des Kernprofils kann dann von einer dünnen Beschichtungsauflage, beispielsweise mit einer Schichtdicke von höchstens 2 mm, insbesondere höchstens 1 mm, überzogen sein. Zweckmäßigerweise beträgt die Schichtdicke der Beschichtung in einem Oberflächenbereich von mindestens 50%, vorzugsweise mindestens 70 %, der von der Beschichtung bedeckten Oberfläche des Kernprofils höchstens 2 mm, vorzugsweise höchstens 1 mm. Alternativ zur Coextrusion kann die äußere Beschichtung jedoch auch als Flüssigkeit und / oder Pulver auf das Kernprofil aufgetragen und danach zu einer Lackschicht ausgehärtet werden. Dies hat den Vorteil, dass für die Auftragung der Beschichtung kein Extruder erforderlich ist. Insbesondere können mittels dieses Verfahrens auch dünnflüssige Beschichtungsmaterialien aufgetragen werden. Im Rahmen der Erfindung liegt es auch, dass die Beschichtung als Folie auf das Kernprofil aufkaschiert wird. Eine Lackierung bzw. Folienkaschierung ist insbesondere dann vorteilhaft, wenn dieThermoplast-Matrix des Kernprofils als PA-, PET(nicht schlagzäh)- oder PBT-Matrix ausgebildet wird, um hier eine große Haftkraft der Beschichtung auf dem Kernprofil sicherzustellen. Als Material für die Lackschicht kommen insbesondere auf Polyurethanharz, Polyesterharz oder Epoxidharz basierende Lacke infrage. Sofern die Beschichtung als Folie aufkaschiert wird, kann diese z.B. Fluorpolymer und/oder Aluminium enthalten bzw. aus Fluorpolymer und/oder Aluminium bestehen. Bei einer Beschichtung in Form einer Lackierung oder Folie beträgt die Schichtdicke der Beschichtung zweckmäßigerweise maximal 1 mm, z.B. maximal 0,5 mm.

Insgesamt sind hinsichtlich des Materials des Kernprofils und der Beschaffenheit der Beschichtung insbesondere die folgenden Kombinationen vorteilhaft:

| Kernprofil | Beschichtung |
|---|---|
| Acrylat, z.B. PMMA | PVC, SAN, ASA oder Acrylat, z.B. PMMA |
| PA, z.B. PA6 | PA, Nasslack, Pulverlack oder Folie |
| PET-G | PVC, SAN, ASA oder Acrylat, z.B. PMMA |
| PET (nicht schlagzäh) | PET, Nasslack, Pulverlack oder Folie |
| PBT | PBT, Nasslack, Pulverlack oder Folie |

Es kann auch zweckmäßig sein, das z.B. eine PA-Matrix (insbes. PA6-Matrix) aufweisende Kernprofil zunächst mit der Beschichtung aus z.B. PA (insbesondere. PA6) zu versehen, beispielsweise zu coextrudieren, und daran anschließend die Beschichtung außenseitig mit einer zweiten Beschichtung, z.B. in Form eines Nass- oder Pulverlacks bzw. einer Kaschierfolie, zu versehen. Dies hat den Vorteil, dass die Oberflächenglättung bereits durch die erste Beschichtung sichergestellt ist und somit die z.B. für die Farbgestaltung wesentliche zweite Beschichtung sehr dünn ausgebildet werden kann. So kann z.B. die Ausbildung der zweiten Beschichtung als kaschierte Aluminiumfolie vorteilhaft sein.

Im Rahmen der Erfindung liegt es insbesondere, dass dem Material der Beschichtung vor dem Auftrag auf das Kernprofil Farbpigmente zugesetzt werden. Somit kann durch die Beschichtung auch das äußere Erscheinungsbild des Strangprofils maßgeblich beeinflusst werden. Farbpigmente im Sinne der Erfindung umfassen auch Weißpigmente, die dafür sorgen, dass das Strangprofil die "Farbe" Weiß erhält, z.B. durch den Einsatz des Weißpigmentes Titandioxid. Häufig besteht jedoch auch der Bedarf an farbigen, z.B. roten, grünen oder blauen Profilen. Diese Einfärbung wird im Stand der Technik z.B. durch die Aufkaschierung einer entsprechend eingefärbten Folie realisiert. Im Rahmen der Erfindung ist es nun möglich, die Farbgebung mittels des ohnehin vorzugsweise bereits vorgesehenen Auftrags einer Beschichtung durchzuführen. Sofern die Aufbringung der Beschichtung durch die vorbeschriebene Aufkaschierung einer Folie erfolgt, ist diese entsprechend eingefärbt.

Wie bereits erwähnt, wird das hergestellte Strangprofil als, vorzugsweise im Querschnitt symmetrisches, Schienenprofil für einen Schiebedeckel, insbesondere einen Glasschiebedeckel, einer Kühltruhe verwendet. Vorzugsweise stellt das Kernprofil den strukturellen Aufbau des Strangprofils dar, welches um die Beschichtung ergänzt wird. So kann beispielsweise die Querschnittsfläche des Kernprofils incl. der Querschnittsfläche etwaiger Hohlkammern mehr als 60 %, vorzugweise mehr als 80 % der Querschnittsfläche des Strangprofils incl. Hohlkammer(n) betragen.

Erfindungsgemäß wird dem Strangprofil während oder nach der reaktiven Pultrusion in Achsrichtung eine Bogenform aufgeprägt. Die Bogenform kann hierbei über ein entsprechend gestaltetes Pultrusionswerkzeug oder auch einen Biegeprozess am Ende des Herstellungsverfahrens, vorzugsweise online, erzeugt werden. Diese Bogenform ist für den genannten Einsatz des Profils als Schienenprofil für eine Kühltruhe wesentlich. Der entsprechende Bogen kann hierbei einen Winkel von mindestens 10°, insbesondere mindestens 20° überspannen.

Im Folgenden wird die Erfindung anhand einer lediglich ein Ausführungsbeispiel darstellenden Zeichnung ausführlich erläutert. Es zeigen schematisch:
- Fig. 1: ein erfindungsgemäßes Verfahren zur Herstellung eines Strangprofils;
- Fig. 2: ein alternatives erfindungsgemäßes Herstellungsverfahren;
- Fig. 3a: ein erfindungsgemäß, beispielsweise mit einem Verfahren gemäß Fig.1 oder 2 hergestelltes Strangprofil in einer Seitenansicht,
- Fig. 3b: den vergrößerten Schnitt A-A in Fig. 3a,
- Fig 3c: das in den Fig. 3a und 3b dargestellte Strangprofil im eingebauten Zustand und
- Fig. 4, 5: vergleichende Darstellungen hinsichtlich Steifigkeit und thermischem Ausdehnungskoeffizient der erfindungsgemäß hergestellten Profile gegenüber dem Stand der Technik.

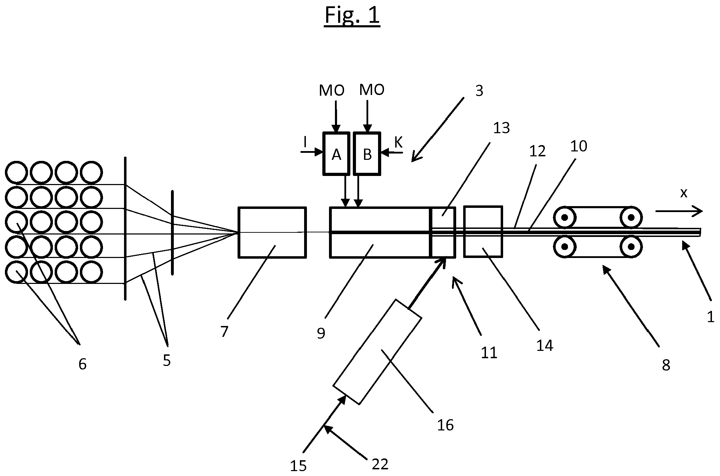

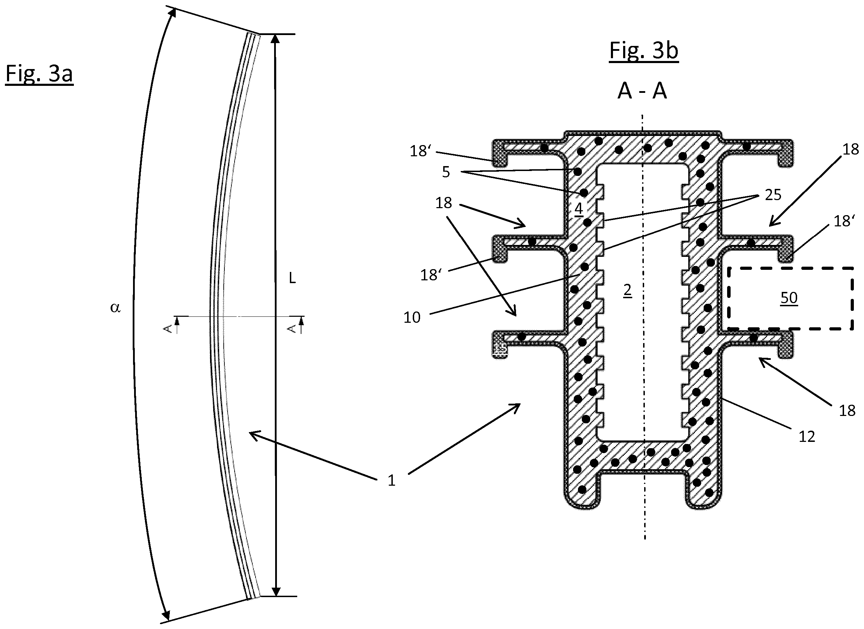

Die Fig. 1 zeigt ein erfindungsgemäßes Verfahren zur Herstellung eines thermoplastischen Strangprofils 1. Bei diesem Verfahren wird das mehrere Hohlkammern 2, 2' (vergl. Fig. 3a-c) aufweisende Strangprofil 1 mithilfe eines Strangproduktionsprozesses 3 hergestellt. Während dieses Strangproduktionsprozesses 3 werden in die thermoplastische Matrix 4 des Strangprofils 1 endlose Verstärkungsglasfasern 5 integriert, die zunächst von Rollen 6 abgezogen und in einer Vorwärmstation 7 vorgewärmt werden. Erfindungsgemäß ist der Strangproduktionsprozess 3 als reaktive Pultrusion ausgebildet. Hierbei wird mittels eines Ziehwerkzeugs 8 das frisch hergestellte Strangprofil 1 über die endlosen Verstärkungsfasern 5 in Produktionsrichtung x aus dem beheizten Pultrusionswerkzeug 9 herausgezogen.

Die reaktive Pultrusion 3 dient zur Herstellung eines endlos faserverstärkten, mehrere Hohlkammern 2 aufweisenden thermoplastischen Kernprofils 10 (s.a. Fig. 3a-c, schwarz eingefärbt) des Strangprofils 1. Hierbei wird die thermoplastische Matrix 4 dieses Kernprofils aus dünnflüssigen Monomeren und/oder reaktiven Oligomeren - beide mit MO bezeichnet - hergestellt, die während der reaktiven Pultrusion 3 zum Thermoplast polymerisiert werden. Neben den Monomeren und/oder reaktvien Oligomeren MO werden der reaktiven Pultrusion 3 zur Führung der darin stattfindenden chemischen Reaktion Initiatoren I und Katalysatoren K zugesetzt. Im Ausführungsbeispiel werden zur Polymerisation des Thermoplasts die mit MO bezeichneten Monomere bzw. Oligomere in zwei Komponenten A und B der reaktiven Pultrusion zugeführt. Die Komponente A enthält Mono-/Oligomere MO sowie Initiatoren I, während die Komponente B neben den Mono-/Oligomeren MO Katalysatoren K enthält. Damit wird sichergestellt, dass erst im Pultrusionswerkzeug 9 ein Reaktionsgemisch enthaltend Mono-/Oligomere MO sowie Initiatoren I und Katalysatoren K vorliegt und somit die Polymerisation auch erst im Pultrusionswerkzeug 9 gestartet wird. Auch über die Beheizung des Pultrusionswerkzeugs 9 kann die Polymerisationsgeschwindigkeit gesteuert werden. Im Ausführungsbeispiel ist die thermoplastische Matrix 4 als PA-Matix, insbesondere PA6-Matrix ausgebildet. Das mit der reaktiven Pultrusion 3 hergestellte Kernprofil 10 wird zur Verbesserung der Oberflächengüte des Strangprofils 1 im Wege einer Coextrusion 11 mit einer äußeren Beschichtung 12, z.B. aus unverstärktem PA, versehen. Beim Ausführungsbeispiel gemäß Fig. 1 findet die Coextrusion 11 unmittelbar im Anschluss an reaktive Pultrusion 3 ohne Zwischenkühlung statt. Hierbei ist das Coextrusionswerkzeug 13 unmittelbar hinter dem Austritt des Werkzeuges 9 für die reaktive Pultrusion 3 angeordnet und ummantelt das Kernprofil 10 online. Erst danach erfolgt die Abkühlung des coextrudierten Strangprofils 1 in einer Abkühlvorrichtung 14, z.B. einem Wasserbad. Alternativ hierzu können die reaktive Pultrusion 3 und die Coextrusion 11 auch in einem gemeinsamen Werkzeug durchgeführt werden.

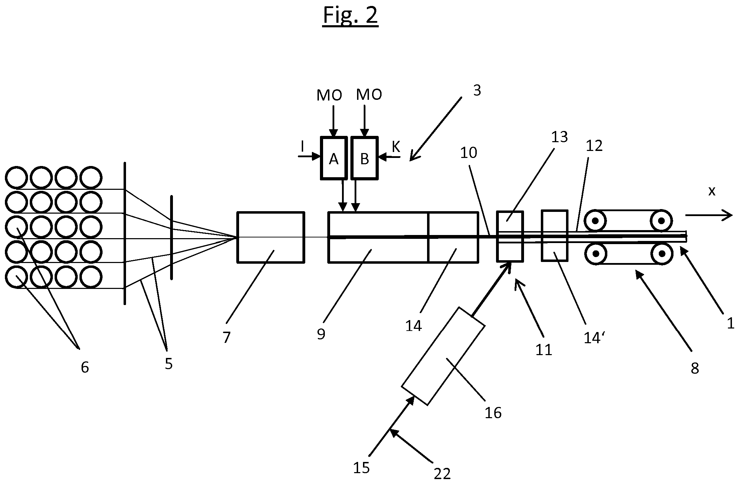

Beim Ausführungsbeispiel gemäß Fig. 2 hingegen erfolgt vor der ebenfalls online erfolgenden Coextrusion 11 der Beschichtung 12 zunächst in einer Abkühlvorrichtung 14 eine Zwischenkühlung des Kernprofils 10. Dies ist insbesondere bei der Coextrusion einer dicken Beschichtung 12 aufgrund des großen Wärmeeintrags sowie der Herstellung einer komplexen Kernprofilgeometrie von Vorteil, um diese vor der Coextrusion 11 zu stabilisieren. Die thermoplastische Matrix 4 des Kernprofils 10 wird wiederum als PA-Matrix ausgebildet. Die coextrudierte Beschichtung 12 besteht ebenfalls aus PA-Material 15, welches einem für die Coextrusion 11 vorgesehenen Extruder 16 zugeführt wird, und damit aus einem auf dem Kernprofil 10 sehr gut haftenden Polymer 15. Das Material 15 der Beschichtung 12 entspricht also im Ausführungsbeispiel dem Material der thermoplastischen Matrix 4 des Kernprofils 10. Nach der Coextrusion 11 der Beschichtung 12 wird das Strangprofil 1 in einer weiteren Abkühlvorrichtung 14' (z.B. einem Wasserbad) final abgekühlt und kalibriert. Ferner ist optional zwischen der ersten Abkühlvorrichtung 14 und der Coextrusion 11 eine weiteres Ziehwerkzeug vorgesehen (nicht dargestellt).

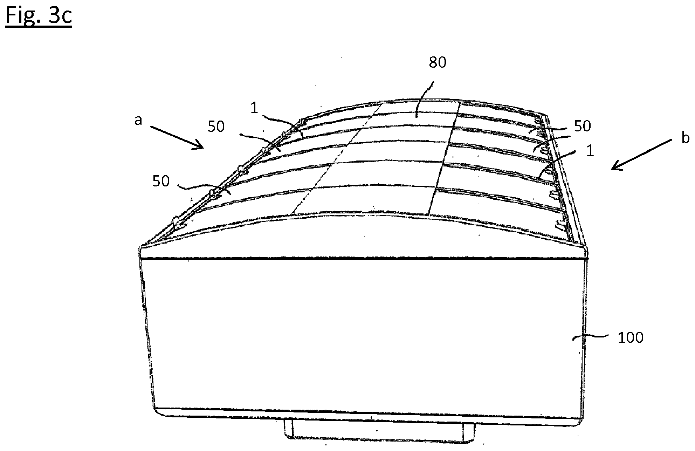

Die Fig. 3a und 3b zeigen ein erfindungsgemäß hergestelltes thermoplastisches Strangprofil 1, welches beispielsweise mit den in Fig. 1 oder 2 beschriebenen Verfahren produziert werden kann. Im Ausführungsbeispiel ist das Strangprofil 1 als Schienenprofil für einen Glasschiebedeckel 50 einer Kühltruhe 100 ausgebildet (s. Fig. 3c), wie sie beispielsweise in Supermärkten anzutreffen ist. Der vergrößerte Querschnitt durch das Profil 1 in Fig. 3b zeigt die in die thermoplastische Matrix 4 des Kernprofils 10 eingebetteten Verstärkungsfasern 5 sowie die Beschichtung 12 aus dem Beschichtungsmaterial 15. Der Gewichtsanteil der Verstärkungsfasern 5 im Kernprofil 10 beträgt im Ausführungsbeispiel mehr als 80 %. Der Fig. 3a ist zu entnehmen, dass das Schienenprofil 1 eine in Achsrichtung bogenförmige Gestalt aufweist, welche dem Schienenprofil während oder nach der reaktiven Pultrusion 3 aufgeprägt wurde (nicht näher dargestellt). Der vom im Ausführungsbeispiel kreissegmentfömigen Schienenprofil 1 hierbei überspannte Winkel α beträgt mehr als 10°. Die vom Profil 1 überspannte Länge L beträgt mehr als 50 cm, z.B. mehr als 1 m. Aus der Fig. 3b ist ersichtlich, dass das Kernprofil 10 eine innere Hohlkammer 2 aufweist, welche zu einer Gewichts- und Materialeinsparung sowie zu verbesserten Wärmedämmeigenschaften führt. Aufgrund der hohen mechanischen Performance des Kernprofils 10 ist der im Stand der Technik regelmäßig erforderliche Einschub eines metallischen Armierungsprofils in die Hohlkammer 2 im Ausführungsbeispiel entbehrlich. Ferner ist erkennbar, dass die äußere Oberfläche des Kernprofils 10 von der Beschichtung 12 vollständig umschlossen ist. Das im Querschnitt symmetrische Schienenprofil 1 umfasst ferner an beiden Seiten übereinander angeordnete Funktionselemente 18 in Form von Auflagestegen, auf denen jeweils ein Glasschiebedeckel 50 aufliegt (in Fig. 3b rechts angedeutet) und während einer Öffnungs- bzw. Schließbewegung entlang gleitet. Durch die mehrfache Anordnung der Auflagestege 18 übereinander können Schiebedeckel 50 von beiden Seiten der Truhe 100 übereinander auf dem Schienenprofil 1 geführt werden (s. Fig 3c). An die Auflagestege 18 sind jeweils endseitig weitere Funktionselemente 18' in Form von vertikalen Vorsprüngen zur vertikalen Führung der Schiebedeckel 50 angeformt, wobei diese Vorsprünge 18' allein vom Material 15 der Beschichtung 12 gebildet werden. Die Fig. 3b zeigt ferner, dass die innere Oberfläche der Hohlkammer 2 mit, vorzugsweise in Achsrichtung des Strangprofils 1 verlaufenden, Rippen 25 versehen ist, die zu einer weiteren Verbesserung der mechanischen Stabilität des Strangprofils 1 beitragen. Die Fig. 3c zeigt mehrere Schienenprofile 1 im eingebauten Zustand als Bestandteil einer Kühltruhe 100. Die Kühltruhe 100 weist an beiden Zugriffsseiten a, b jeweils mehrere Schiebedeckel 50 auf, die durch eine Verfahrbewegung zur Zentralplatte 80 in der Mitte der Kühltruhe 80 einen Zugriff auf das (nicht dargestellte) Kühlgut, z.B. tiefgefrorene Lebensmittel, erlauben. Um gleichzeitig von beiden Seiten a, b den Zugriff zu ermöglichen, müssen die jeweils auf denselben Schienenprofilen 1 geführten Schiebedeckel 50 vertikal versetzt zueinander angeordnet sein. Dies wird durch die bereits beschriebene mehrfache Anordnung der Auflagestege 18 übereinander ermöglicht.

Die in Fig. 3a bis 3c dargestellten Strangprofile 1 können durch den Zusatz von Farbpigmenten 22 zum Material 15 der Beschichtung 12 vor dem Auftrag auf das Kernprofil 10 entsprechend eingefärbt werden. Neben dem Einsatz klassischer Weißpigmente 22, z.B. Titandioxid, können insbesondere auch Farbpigmente 22 verwendet werden, die der Beschichtung 12 eine "echte" Farbe verleihen und z.B. zu einer roten, grünen, blauen, grauen, gelben oder auch schwarzen Einfärbung des Strangprofils 1 führen. In den Ausführungsbeispielen nicht dargestellt, jedoch im Rahmen der Erfindung ebenfalls möglich ist es, dass die äußere Beschichtung als Flüssigkeit und / oder Pulver auf das Kernprofil 10 aufgetragen und danach zu einer Lackschicht ausgehärtet wird.

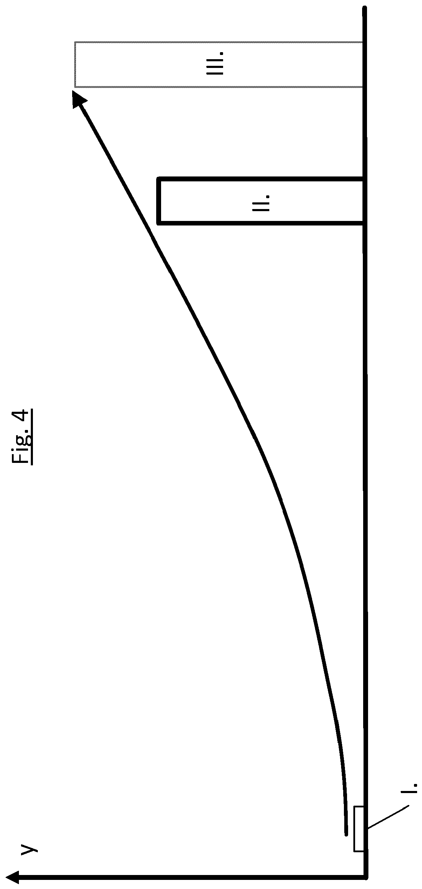

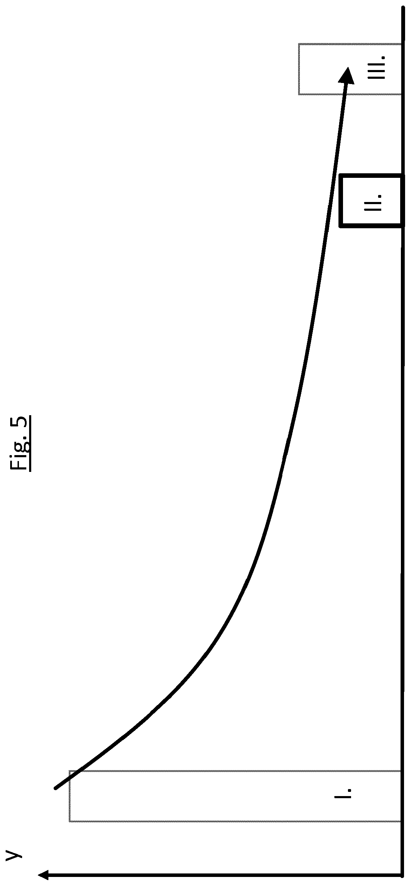

Die nachfolgenden Fig. 4 und 5 zeigen die Performance erfindungsgemäß hergestellter Strangprofile 1 im Vergleich zum Stand der Technik. Es ist erkennbar, dass mit einem erfindungsgemäß hergestellten Strangprofil 1 (Ziffer II.) eine erheblich höhere mechanische Steifigkeit (y-Achse: E-Modul) erzielt werden kann als dies bei einem unverstärkten Profil (I.) möglich ist. Mit dem erfindungsgemäß hergestellten Profil 1 (II.) können annähernd mechanische Eigenschaften wie bei einem Aluminium-Gussprofil ohne thermische Trennung (III.) erzielt werden. Letzteres weist jedoch erheblich schlechtere Wärmedämmeigenschaften auf, ist sehr teuer und besitzt ein hohes Gewicht.

Ein weiterer Vorteil der erfindungsgemäßen Lehre liegt darin, dass die damit hergestellten Profile 1 nur einen sehr niedrigen Wärmeausdehnungskoeffizienten aufweisen. Dieser Vorteil ist in der Fig. 5 dargestellt. Hier sind auf der y-Achse jeweils die thermischen Ausdehnungskoeffizienten dargestellt, wobei die Bezeichnungen Ziff. I., II. und III. sich jeweils auf dieselben Profile beziehen wie in Fig. 4.. Die Wärmeausdehnung erfindungsgemäßer Profile 1 (II.) ist deutlich niedriger als beim unverstärkten Profil (I.) Sogar Aluminiumprofile (III.) weisen hier eine schlechtere Performance - also einen größeren Ausdehnungskoeffizienten - auf als die erfindungsgemäß hergestellten Profile 1.

## Patentansprüche

1. Verfahren zur Herstellung und Nutzung eines thermoplastischen Strangprofils (1),
- wobei das mindestens eine Hohlkammer (2) aufweisende Strangprofil (1) mit Hilfe eines Strangproduktionsprozesses (3) hergestellt wird,
- wobei während des Strangproduktionsprozesses (3) in die thermoplastische Matrix (4) des Strangprofils (1) endlose Verstärkungsfasern (5) integriert werden und der Strangproduktionsprozess (3) als reaktive Pultrusion ausgebildet ist, die zur Herstellung eines endlos faserverstärkten, thermoplastischen, mindestens eine Hohlkammer (2) aufweisenden Kernprofils (10) des Strangprofils (1) dient, und
- wobei das Kernprofil (10) zur Verbesserung der Oberflächengüte des Strangprofils (1) mit einer äußeren Beschichtung (12) versehen wird,
- wobei das Strangprofil (1) als Schienenprofil für einen Schiebedeckel (50) einer Kühltruhe (100) verwendet wird, und
- wobei dem Schienenprofil (1) während oder nach der reaktiven Pultrusion (3) in Achsrichtung eine Bogenform aufgeprägt wird.

2. Verfahren nach Anspruch 1, **dadurch gekennzeichnet, dass** die thermoplastische Matrix (4) des Kernprofils (10) aus dünnflüssigen Monomeren (MO) und/oder reaktiven Oligomeren (MO) hergestellt wird, die während der reaktiven Pultrusion (3) zum Thermoplast polymerisiert werden.

3. Verfahren nach Anspruch 1 oder 2, **dadurch gekennzeichnet, dass** die Beschichtung (12) mindestens 70 % der äußeren Oberfläche des Kernprofils (10) bedeckt.

4. Verfahren nach einem der Ansprüche 1 bis 3, **dadurch gekennzeichnet, dass** die thermoplastische Matrix (4) des Kernprofils (10) als Polyamid-Matrix, Polyacrylat-Matrix oder Polyester-Matrix ausgebildet wird.

5. Verfahren nach einem der Ansprüche 1 bis 4, **dadurch gekennzeichnet, dass** die Beschichtung (12) aus einem auf dem Kernprofil (10) haftenden Polymer (15) hergestellt wird, welches vorzugsweise dem Material der thermoplastischen Matrix (4) des Kernprofils (10) entspricht.

6. Verfahren nach Anspruch 5, **dadurch gekennzeichnet, dass** die äußere Beschichtung (12) mit dem Kernprofil (10) coextrudiert wird.

7. Verfahren nach einem der Ansprüche 1 bis 6, **dadurch gekennzeichnet, dass** lediglich von der Beschichtung (12) mindestens ein Funktionselement (18') gebildet wird.

8. Verfahren nach einem der Ansprüche 1 bis 7, **dadurch gekennzeichnet, dass** die äußere Beschichtung (12) als Flüssigkeit und/oder Pulver auf das Kernprofil (10) aufgetragen und danach zu einer Lackschicht ausgehärtet oder als Folie auf das Kernprofil (10) aufkaschiert wird.

9. Verfahren nach einem der Ansprüche 1 bis 8, **dadurch gekennzeichnet, dass** dem Material (15) der Beschichtung (12) vor dem Auftrag auf das Kernprofil (10) Farbpigmente (22) zugesetzt werden.

10. Verfahren nach einem der Ansprüche 1 bis 9, **dadurch gekennzeichnet, dass** das Schienenprofil (1) im Querschnitt symmetrisch ausgebildet wird.

## Claims

1. Method for manufacturing and using a thermoplastic extruded profile (1),
- wherein the extruded profile (1), comprising at least one hollow chamber (2), is manufactured by means of an extrusion production process (3),
- wherein, during the extrusion production process (2), endless reinforcing fibres (5) are integrated into the thermoplastic matrix (4) of the extruded profile (1) and the extrusion production process (3) is designed as a reactive pultrusion which serves for manufacturing an endlessly fibre-reinforced, thermoplastic core profile (10) of the extruded profile (1), comprising at least one hollow chamber (2), and
- wherein the core profile (10) is provided with an outer coating (12) in order to improve the surface quality of the extruded profile (1),
- wherein the extruded profile (1) is used as a rail profile for a sliding lid (50) of a freezer cabinet (100), and
- wherein an arcuate shape is impressed on the rail profile (1), during or after the reactive pultrusion (3), in the axial direction.

2. Method according to claim 1, **characterised in that** the thermoplastic matrix (4) of the core profile (10) is manufactured from low-viscosity monomers (MO) and/or reactive oligomers (MO), which are polymerised during the reactive pultrusion (3) to form the thermoplastic.

3. Method according to either claim 1 or claim 2, **characterised in that** the coating (12) covers at least 70% of the outer surface of the core profile (10).

4. Method according to any of claims 1 to 3, **characterised in that** the thermoplastic matrix (4) of the core profile (10) is formed as a polyamide matrix, polyacrylate matrix, or polyester matrix.

5. Method according to any of claims 1 to 4, **characterised in that** the coating (12) is manufactured from a polymer (15) adhering on the core profile (10), which polymer preferably corresponds to the material of the thermoplastic matrix (4) of the core profile (10).

6. Method according to claim 5, **characterised in that** the outer coating (12) is coextruded together with the core profile (10).

7. Method according to any of claims 1 to 6, **characterised in that** at least one functional element (18') is formed merely by the coating (12).

8. Method according to any of claims 1 to 7, **characterised in that** the outer coating (12) is applied to the core profile (10) as a liquid and/or powder, and is subsequently cured to form a lacquer layer or is laminated onto the core profile (10) as a film.

9. Method according to any of claims 1 to 8, **characterised in that** colour pigments (22) are added to the material (15) of the coating (12) prior to application onto the core profile (10).

10. Method according to any of claims 1 to 9, **characterised in that** the rail profile (1) is formed so as to be symmetrical in cross-section.

## Revendications

1. Procédé de fabrication et d'utilisation d'un profilé extrudé (1) thermoplastique,
- dans lequel le profilé extrudé (1) présentant au moins une chambre creuse (2) est fabriqué à l'aide d'un processus de production par extrusion (3),
- dans lequel des fibres de renforcement (5) sans fin sont intégrées pendant le processus de production par extrusion (3) dans la matrice (4) thermoplastique du profilé extrudé (1) et le processus de production par extrusion (3) est réalisé en tant que pultrusion réactive, qui sert à fabriquer un profilé central (10), renforcé par des fibres sans fin, thermoplastique, présentant au moins une chambre creuse (2), du profilé extrudé (1), et
- dans lequel le profilé central (10) est pourvu d'un revêtement extérieur (12) pour améliorer la qualité de surface du profilé extrudé (1),
- dans lequel le profilé extrudé (1) est utilisé en tant que profilé de rail pour un couvercle coulissant (50) d'un congélateur (100), et
- dans lequel une forme d'arc est conférée au profilé de rail (1) pendant ou après la pultrusion réactive (3) dans la direction axiale.

2. Procédé selon la revendication 1, **caractérisé en ce que** la matrice thermoplastique (4) du profilé central (10) est fabriquée à partir de monomères très fluides (MO) et/ou d'oligomères réactifs (MO), qui sont polymérisés pendant la pultrusion réactive (3) en la matière thermoplastique.

3. Procédé selon la revendication 1 ou 2, **caractérisé en ce que** le revêtement (12) recouvre au moins 70 % de la surface extérieure du profilé central (10).

4. Procédé selon l'une quelconque des revendications 1 à 3, **caractérisé en ce que** la matrice thermoplastique (4) du profilé central (10) est réalisée en tant que matrice à base de polyamide, matrice à base de polyacrylate ou matrice à base de polyester.

5. Procédé selon l'une quelconque des revendications 1 à 4, **caractérisé en ce que** le revêtement (12) est fabriqué à partir d'un polymère (15) adhérant sur le profilé central (10), lequel correspond de préférence au matériau de la matrice thermoplastique (4) du profilé central (10).

6. Procédé selon la revendication 5, **caractérisé en ce que** le revêtement extérieur (12) est coextrudé avec le profilé central (10).

7. Procédé selon l'une quelconque des revendications 1 à 6, **caractérisé en ce qu'**au moins un élément fonctionnel (18') est formé seulement par le revêtement (12).

8. Procédé selon l'une quelconque des revendications 1 à 7, **caractérisé en ce que** le revêtement extérieur (12) est appliqué en tant que liquide et/ou poudre sur le profilé central (10) puis est durci en une couche de vernis ou est contrecollé en tant que film sur le profilé central (10).

9. Procédé selon l'une quelconque des revendications 1 à 8, **caractérisé en ce que** des pigments de couleur (22) sont ajoutés au matériau (15) du revêtement (12) avant l'application sur le profilé central (10).

10. Procédé selon l'une quelconque des revendications 1 à 9, **caractérisé en ce que** le profilé de rail (1) est réalisé de manière symétrique dans la section transversale.
